(19) Europäisches Patentamt / European Patent Office / Office européen des brevets

(11) **EP 2 688 709 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.05.2023   Patentblatt 2023/20**

(45) Hinweis auf die Patenterteilung:
**05.10.2016   Patentblatt 2016/40**

(21) Anmeldenummer: **12712092.1**

(22) Anmeldetag: **22.03.2012**

(51) Internationale Patentklassifikation (IPC):
*B23P 9/02* (2006.01)          *B21C 37/30* (2006.01)
*B24B 39/02* (2006.01)          *F16C 9/04* (2006.01)
*F16C 33/08* (2006.01)          *F16C 33/14* (2006.01)

(52) Gemeinsame Patentklassifikation (CPC):
**B23P 9/025; B21C 37/30; B24B 39/02; F16C 9/04; F16C 33/08; F16C 33/14;** B23P 2700/04; F16C 2223/04

(86) Internationale Anmeldenummer:
**PCT/EP2012/055156**

(87) Internationale Veröffentlichungsnummer:
**WO 2012/130738 (04.10.2012 Gazette 2012/40)**

(54) **VERFAHREN, WERKZEUG UND MASCHINE ZUM KALIBRIEREN VON BUCHSEN**

METHOD, TOOL AND MACHINE AND FOR CALIBRATING BUSHINGS

PROCÉDÉ, OUTIL ET MACHINE ET POUR CALIBRER DES COUSSINETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2011   DE 102011001492**

(43) Veröffentlichungstag der Anmeldung:
**29.01.2014   Patentblatt 2014/05**

(73) Patentinhaber: **Alfing Kessler Sondermaschinen GmbH**
**73433 Aalen (DE)**

(72) Erfinder:
• **GRUHLER, Siegfried**
**72189 Vöhringen (DE)**
• **KELLER, Martin**
**78733 Aichhalden (DE)**
• **BREITHAUPT, Willi**
**78126 Königsfeld (DE)**
• **KLEIN, Joachim**
**78727 Oberndorf (DE)**

(74) Vertreter: **Patentanwälte Bregenzer und Reule Partnerschaftsgesellschaft mbB**
**Neckarstraße 47**
**73728 Esslingen (DE)**

(56) Entgegenhaltungen:
AT-A1- 506 831          BE-A- 394 220
DE-B3-102009 037 233     US-A- 1 469 793
US-A- 2 726 704          US-A- 3 445 908
US-A- 3 644 005

• **DATABASE WPI Week 199248 Thomson Scientific, London, GB; AN 1992-396905 XP002676627, -& SU 1 706 759 A1 (TYR V R) 23. Januar 1992 (1992-01-23)**

EP 2 688 709 B2

**Beschreibung**

Die Erfindung betrifft ein Verfahren zum Kalibrieren von Buchsen.

Bei Kalibrierwerkzeugen für Buchsen, die z.B. zuvor in ein Auge eines Pleuels eingepresst wurden, ist es aus dem Stand der Technik bekannt, Stangen mit radial erweiterten Kalibriersegmenten durch die Buchse zu pressen. Dabei werden mehrere Kalibriersegmente vorgesehen, die an der Stange entlang ihrer Längsachse angeordnet sind und - in Einpressrichtung betrachtet - geringfügig zunehmende Durchmesser haben.

Nachteilig ist die Anwendung derartiger Kalibrierwerkzeugen bei Buchsen, deren Ränder nicht parallel zueinander angeordnete Kreise sind, wenn also eine Stirnfläche oder beide Stirnflächen schräg zur Längsachse angestellt ist bzw. sind. Im Folgenden werden derartige Buchsen mit getrennten Bereichen betrachtet: Es wird ein Vollkreisbereich betrachtet, in dem jede senkrecht zur Längsachse der Buchse verlaufende Schnittebene einen komplett geschlossenen Kreis ergibt, und weiterhin wird bzw. werden ein bzw. zwei Teilkreisbereiche betrachtet, in dem bzw. in denen jede senkrecht zur Längsachse der Buchse verlaufende Schnittebene ein Kreissegment bzw. einen Kreisbogen ergibt.

Bei der Kalibrierung derartiger Buchsen ist es von Nachteil dass ein Kalibriersegment, das in einen Teilkreisbereich eingeführt oder eingepresst wird, darin keine Zentrierung durch die Buchse erfährt, sondern durch den nicht geschlossenen Anlagekreisbogen des Teilkreisbereichs zum verbleibenden geöffneten Kreisbogen gedrängt wird. Dadurch ergibt sich eine eingeschränkte Press- und Glättwirkung des Teilkreisbereichs durch das Kalibriersegment.

Zur Kompensation derartiger radialer Kräfte ist es aus dem Stand der Technik weiterhin bekannt, die Stange, an der das betroffene Kalibriersegment befestigt ist, stirnseitig durch eine axial angesetzte weitere Stange radial abzustützen. Dabei fährt z.B. die Stange mit dem Kalibriersegment von unten durch die Buchse, während die weitere Stange von oben daran andockt. Die weitere Stange kann zuvor zum Einpressen der Buchse in ein Auge eines Pleuels genutzt worden sein.

Die AT 506 831 A1 offenbart ein Verfahren zum Kalibrieren von Lagerbuchsen mit über ihren Umfang unterschiedlicher Länge, wobei die radial abgestützten Lagerbuchsen einem Ziehvorgang mit Hilfe eines als Ziehdorn oder Ziehring ausgebildeten Kalibrierwerkzeuges unterworfen werden, wobei die Lagerbuchsen während des Ziehvorganges mit einer axialen Vorspannung über den gesamten Umfang beaufschlagt werden. Nachteilig an bekannten Kalibrierwerkzeugen ist ihr vorrichtungstechnischer Aufwand.

Die US 3,644,005 offenbart ein Kalibrierwerkzeug für eine Buchse mit zwei verrundeten Kalibriersegmenten. Der Erfindung liegt die Aufgabe zu Grunde, ein Verfahren zu schaffen, mit dem auch Teilkreisabschnitte von Buchsen optimal und einfach kalibriert werden können.

Diese Aufgabe wird gelöst durch ein Verfahren mit den Merkmalen des Patentanspruchs 1.

Das Werkzeug dient zum Kalibrieren einer Buchse. Es hat eine Stange bzw. einen Zapfen, die ein erstes verrundetes Kalibriersegment und weitere verrundete Kalibriersegmente aufweist, die gegenüber der Stange radial erweitert sind. Zur genauen Formgebung einer zylindrischen Innenfläche der Buchse ist die Stange mit den Kalibriersegmenten durch die - insbesondere in ein Auge eines Pleuels eingesetzte und ortsfest gehaltene - Buchse linear bewegbar. Dabei ist ein Abstand zwischen den beiden Kalibriersegmenten derart kurz bemessen, dass das erste Kalibriersegment mit einem entlang dem Umfang der Buchse geschlossenen Vollkreisbereich der Buchse in Anlage gebracht werden kann, während gleichzeitig das weitere Kalibriersegment mit einem entlang dem Umfang der Buchse teilweise offen Teilkreisbereich der Buchse in Anlage gebracht werden kann. Damit dient der das erste Kalibriersegment, das sich im Vollkreisbereich an der Buchse abstützt, über die Stange als Zentriervorrichtung vor das weitere Kalibriersegment. Damit ist die mögliche Anpresskraft des weiteren Kalibriersegments gegen die nicht rotationssymmetrische Innenwandung des Teilkreisbereiches der Buchse erhöht und die Kalibriergenauigkeit des erfindungsgemäßen Werkzeugs erhöht.

Bei einer besonders bevorzugten Weiterbildung ist ein Abstand zwischen zwei Kalibriersegmenten kleiner ist als eine Länge des Vollkreisbereiches der Buchse. Damit ist sicher gestellt, dass immer zumindest eine Kalibriersegment im Vollkreisbereich zur Abstützung des anderen Kalibriersegments angeordnet ist.

Bei einer besonders bevorzugten Weiterbildung ist ein Durchmesser des ersten Kalibriersegments um mehrere hundertstel Millimeter kleiner ist als der Durchmesser des zweiten Kalibriersegments. Dadurch kann das erste Kalibriersegment zum Vorkalibrieren und das zweite Kalibriersegment zum Feinkalibrieren genutzt werden.

Die Stange des Werkzeugs hat ein drittes verrundetes Kalibriersegment. Ein Abstand zwischen dem ersten und dem dritten Kalibriersegment ist derart klein bemessen, dass das erste Kalibriersegment mit dem Vollkreisbereich der Buchse in Anlage bringbar ist, während gleichzeitig das dritte Kalibriersegment mit einem weiteren Teilkreisbereich der Buchse in Anlage gebracht werden kann. Der weitere Teilkreisbereich ist prinzipiell mit dem ersten Teilkreisbereich vergleichbar und entlang dem Umfang der Buchse teilweise offen.

Dabei wird es bevorzugt, wenn das erste Kalibriersegment zwischen dem zweiten und dem dritten Kalibriersegment angeordnet ist, wobei ein Abstand zwischen dem zweiten und dem dritten Kalibriersegment kleiner ist, als eine maximale Länge der Buchse.

Es wird bevorzugt, wenn der Durchmesser des ersten Kalibriersegments und der Durchmesser des zweiten Kalibriersegments gleich groß sind, und wenn der Durchmesser des dritten Kalibriersegments um mehrere hundertstel Millimeter kleiner ist als der Durchmesser des ersten Kalibriersegments. Damit kann das dritte Kalibriersegment als erstes durch die Buchse gedrückt werden und dabei zum Vorkalibrieren dienen. Das erste und zweite Kalibriersegment werden danach durch die Buchse gedrückt und dienen zur Feinkalibrierung.

Das dritte Kalibriersegment läuft dem ersten und dem zweiten Kalibriersegment in - z.B. nach unten gerichteter - Einführrichtung bzw. Einfädelrichtung der Stange vor.

Bei einer Ausführung ist ein viertes verrundetes Kalibriersegment vorgesehen, das dem ersten und dem zweiten Kalibriersegment in Einführrichtung bzw. Einfädelrichtung der Stange nachläuft.

Dabei kann ein Durchmesser des vierten Kalibriersegments größer oder gleich dem Durchmesser des benachbarten zweiten Kalibriersegments sein. Dann dient das vierte Kalibriersegment dem abschließenden Feinkalibrieren oder zum Abstützen des benachbarten zweiten Kalibriersegments.

Oder der Durchmesser des vierten Kalibriersegments ist kleiner als der Durchmesser des benachbarten zweiten Kalibriersegments. Dann dient das vierte Kalibriersegment bei einer der Einführrichtung entgegengesetzten Rückbewegung der Stange als Einführhilfe oder zum Vorkalibrieren oder zum Abstützen des benachbarten zweiten Kalibriersegments.

Vorzugsweise sind die Kalibriersegmente von Kugelabschnitten, also von Ringen mit gleichmäßig gekrümmten Außenseiten gebildet.

Zur Bearbeitung von besonders kurzen Buchsen können die Kalibriersegmente direkt zueinander benachbart aneinander anliegend an der Stange befestigt sein.

Ein bevorzugte Weiterbildung des Werkzeugs hat eine Aufnahme oder Halterung für ein Pleuel oder für ein Pleuelauge, durch das die Stange linear bewegbar ist. Dabei ist die Buchse in das Pleuelauge eingepresst und wird über das Pleuel von der Aufnahme oder Halterung ortsfest gehalten.

Eine bevorzugte Weiterbildung hat eine Einspanvorrichtung, über die das Pleuel oder das Pleuelauge währen des Kalibrierens ortsfest gehalten werden kann. Die Einspannvorrichtung weist die Aufnahme und einen Niederhalter auf. Damit wird ein Abheben des Pleuels bei der Rückbewegung der Stange verhindert. Der Niederhalter kann rotationssymmetrisch sein.

Eine bevorzugte Weiterbildung hat zumindest eine Reinigungsbürste für die Kalibriersegmente. Diese kann als rotationssymmetrische Reinigungsbürste am Niederhalter befestigt sein. Mit der Reinigungsbürste kann Zinn aus einer Beschichtung der Buchse, das nach dem Kalibrieren an den Kalibriersegmenten haftet, abgestreift oder abgebürstet werden. Mit der Reinigungsbürste kann ein geringe Menge Schmierstoff an die Kalibriersegmente übertragen werden, um ein Herausschieben der Buchse aus dem Pleuelauge zu verhindern.

Eine bevorzugte Weiterbildung hat ein konisches oder kegeliges Einführteil oder Einfädelhilfe. Dieses bzw. diese ist in Einführrichtung vor den Kalibriersegmenten konzentrisch an der Stange angeordnet.

Die Maschine dient zur Bearbeitung eines Pleuelauges und hat ein Einpresswerkzeug für eine Buchse und ein vorbeschriebenes Kalibrierwerkzeug. Beide Werkzeuge können nacheinander zum Pleuelauge bewegt werden und bearbeiten nacheinander das ortsfest gehaltene Pleuel.

Das erfindungsgemäß Verfahren dient zum Kalibrieren einer Buchse, die einen mittleren entlang einem Umfang der Buchse geschlossen Vollkreisbereich und dazu axial benachbart einen ersten und einen zweiten entlang dem Umfang der Buchse teilweise offenen Teilkreisbereich hat. Das Verfahren nutzt ein Kalibrierwerkzeug, das eine Stange mit drei verrundeten Kalibriersegmenten, die gegenüber der Stange radial erweitert sind. Das Verfahren hat die Schritte:

- Einfahren des dritten Kalibriersegments in den ersten Teilkreisbereich;
- Einfahren des dritten Kalibriersegments in den Vollkreisbereich;
- Einfahren des ersten Kalibriersegments in den ersten Teilkreisbereich mit gleichzeitigem Abstützen bzw. Zentrieren der Stange über das in dem Vollkreisbereich aufgenommene dritte Kalibriersegment;
- Einfahren des ersten Kalibriersegments in den Vollkreisbereich;
- Einfahren des dritten Kalibriersegments in den zweiten Teilkreisbereich und Einfahren des zweiten Kalibriersegments in den ersten Teilkreisbereich bei gleichzeitigem Abstützen bzw. Zentrieren der Stange über das in dem Vollkreisbereich aufgenommene erste Kalibriersegment.

Bei dem erfindungsgemäßen Verfahren kann bei allen Schritten, die mit "Einfahren" bezeichnet sind, ein Kalibrieren durch radiales Pressen nach außen des betroffenen Bereichs der Buchse erfolgen.

Bei dem erfindungsgemäßen Verfahrens erfolgt zunächst der Schritt Einpressen der Buche in ein Pleuelauge.

Im Folgenden werden anhand der Figuren Ausführungsbeispiele der Erfindung detailliert beschrieben. Es zeigen:

Figur 1 ein erstes Kalibrierwerkzeug in einer seitlichen Ansicht;

Figur 2 ein zweites Kalibrierwerkzeug in einer seitlichen Ansicht;

Figur 3 ein drittes Kalibrierwerkzeug in einer seitlichen Ansicht; und

Figur 4 ein viertes Kalibrierwerkzeug in einer seitlichen Ansicht.

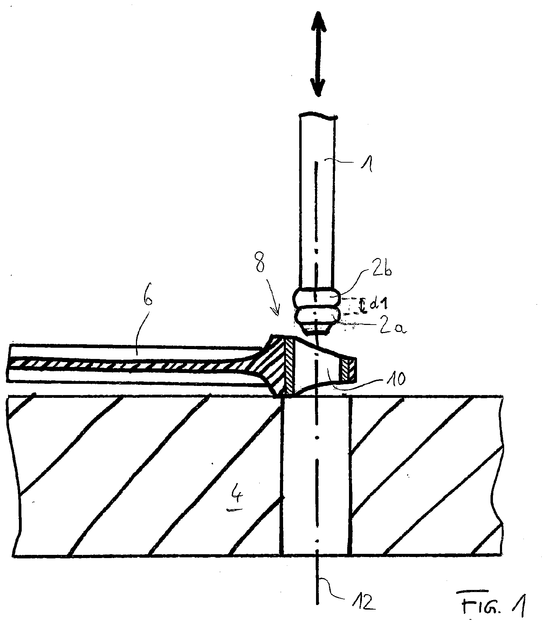

Figur 1 zeigt ein erstes Kalibrierwerkzeug in einer seitlichen Ansicht. Es hat eine (nur teilweise dargestellte) Stange 1, an deren (in Figur 1) unteren Endabschnitt zwei im Prinzip gleichartige aus hartem Werkstoff gefertigte Kugelabschnitte 2a, 2b befestigt sind. Diese sind radial gegenüber der Stange 1 erweitert. Über einen (nicht gezeigten) Antrieb und über die Stange 1 sind die beiden Kugelabschnitte 2a, 2b gemäß dem Doppelpfeil senkrecht verfahrbar.

Weiterhin ist eine Werkzeugaufnahme 4 gezeigt, an der ein Pleuel 6 übergangsweise fixiert ist. Dazu dient eine (nicht gezeigte) Aufnahme oder Halterung. Das Pleuel 6 hat ein (nicht gezeigtes) großes Pleuelauge und ein kleines Pleuelauge 8.

In einem vorherigen Arbeitsschritt wurde eine Buchse 10 in das Pleuelauge 8 eingepresst. Ziel des darauf folgenden in Figur 1 dargestellten Arbeitsschrittes mit dem Kalibrierwerkzeug 1, 2a, 2b ist einerseits ein Erhöhen des Anpressdrucks der Buchse 10 an das Pleuelauge 8 und andererseits eine Glättung und Verringerung der Toleranzen einer in einer inneren Mantelfläche der Buchse 10. Dazu werden die beiden Kugelabschnitte 2a, 2b längs durch die Buchse 10 geführt bzw. gepresst, wobei bei einer Bewegungsrichtung (in Figur 1) von oben nach unten zunächst der erste Kugelabschnitt 2a zum Vorkalibrieren und danach der zweite Kugelabschnitt 2b mit minimal vergrößertem Durchmesser zum Feinkalibrieren durch die Buchse 10 bewegt werden.

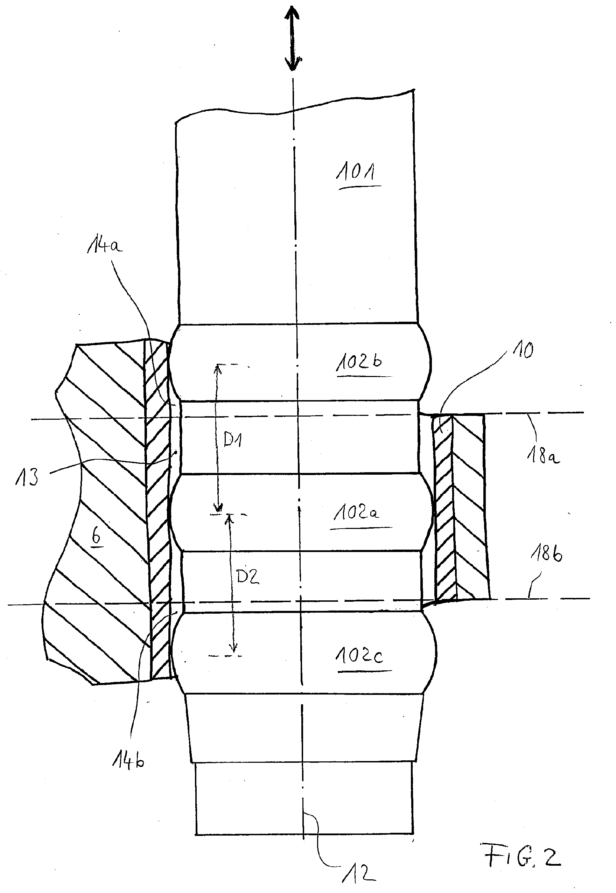

Figur 2 zeigt ein zweites Kalibrierwerkzeug in einer seitlichen Ansicht. Es dient ebenfalls zur Kalibrierung einer Buchse 10 gemäß Figur 1. Die Buchse 10 hat entlang ihrer Längsachse 12 einen mittleren Vollkreisbereich 13 und (in Figur 2) darüber einen ersten Teilkreisbereich 14a und (in Figur 2) darunter einen zweiten Teilkreisbereich 14b. Der Vollkreisbereich 13 zeichnet sich dadurch aus, dass er sich über den kompletten Umfang der Buchse 10 erstreckt, wobei die beiden Teilkreisbereiche 14a, 14b jeweils (in Figur 2) rechts offen sind. Die gestrichelte Linie 18a markiert die Grenze zwischen dem ersten Teilkreisbereich 14a und den Vollkreisbereich 13, während die andere gestrichelte Linie 18b die Grenze zwischen dem zweiten Teilkreisbereich 14b und dem Vollkreisbereich 13 markiert. Die Linien 18a, 18b und die Trennung der drei Bereiche 13, 14a, 14b der Buchse 10 dienen lediglich zur Erläuterung der Erfindung.

Das erste Kalibrierwerkzeug gemäß Figur 1 ist in der Lage, mit geringem vorrichtungstechnischem Aufwand auch die beiden (in Figur 1 nicht markierten) Teilkreisbereiche 14a, 14b mit hoher Genauigkeit zu kalibrieren. Wenn z.B. der zweite Kugelabschnitt 2b in den ersten Teilkreisbereich 14a eintaucht und dabei eine radiale Kraft (in Figur 1) nach rechts. erfährt, stützt er sich über den ersten Kugelabschnitt 2a am Pleuel 6 ab. Dies ist möglich, da der erste Kugelabschnitt 2a im Vollkreisbereich der Buchse 10 angeordnet ist, während der zweite Kugelabschnitt 2b in den ersten Teilkreisbereich 14a eintaucht.

Das zweite Kalibrierwerkzeug gemäß Figur 2 hat neben einem ersten Kugelabschnitt 102a und einem zweiten Kugelabschnitt 102b noch einen dritten Kugelabschnitt 102c, wobei die drei Kugelabschnitte 102a-c nicht direkt aneinander anliegen, sondern einen Abstand zueinander aufweisen. Bei der in Figur 2 gezeigten Stellung der Stange 101 dienen die Kugelabschnitte 102b und 102c zum Kalibrieren der damit in Anlage befindlichen Teilkreisabschnitte 14a, 14b. Dabei stützen sich die Kugelabschnitte 102b, 102c über die Stange 101, über den Kugelabschnitt 102a, über die Buchse 10 und über das (nur teilweise gezeigte) Pleuel 6 an einer (nicht gezeigten) Aufnahme oder Halterung ab. Damit ist ein radiales Ausweichen des Kalibrierwerkzeugs (in Figur 2) nach rechts verhindert, wodurch die Oberflächengüte und Maßhaltigkeit der beiden Teilkreisabschnitte 14a, 14b optimiert sind.

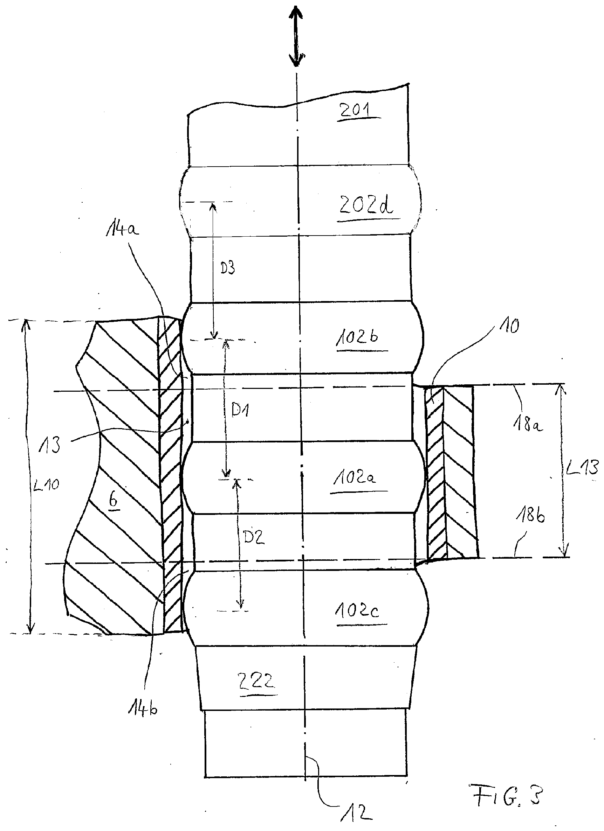

Figur 3 zeigt ein drittes Kalibrierwerkzeugs in einer seitlichen Ansicht. Es entspricht weitgehend dem zweiten Ausführungsbeispiel gemäß Figur 2, so dass im Folgenden nur die Unterschiede zum zweiten Ausführungsbeispiel erläutert werden. Das dritte Ausführungsbeispiel hat einen vierten Kugelabschnitt 202d, der benachbart zum zweiten Kugelabschnitt 102b an der Stange 201 befestigt ist. Die Einführrichtung der Stange 201 in die Buchse 10 ist - wie auch in den anderen Figuren - von oben nach unten gerichtet, so dass der vierte Kugelabschnitt 202d nach dem zweiten Kugelabschnitt 102b in die Buchse 10 eingeführt wird. Da ein Abstand D3 des vierten Kugelabschnitts 202d zum zweiten Kugelabschnitt 102b geringer als eine Länge L13 des Vollkreisbereichs 13 ist, kann sich die Stange 201 über den zweiten Kugelabschnitt 102b über den Vollkreisbereich 13 der Buchse 10 abstützen, während der vierte Kugelabschnitt 202d den ersten Teilkreisbereich 14a kalibriert. Umgekehrt kann sich auch der zweite Kugelabschnitt 102b über den vierten Kugelabschnitt 202d abstützen, wenn der zweite Kugelabschnitt 102b den zweiten Teilkreisbereich 14b kalibriert, während der vierte Kugelabschnitt 202d voll umfänglich vom Vollkreisbereich 13 umfasst ist.

Das dritte Ausführungsbeispiel gemäß Figur 3 hat ein konisches bzw. kegelstumpfförmiges Einführteil 222, das konzentrisch an der Stange 201 angeordnet ist und in Einführrichtung dem dritten Kugelabschnitt 102c vorläuft.

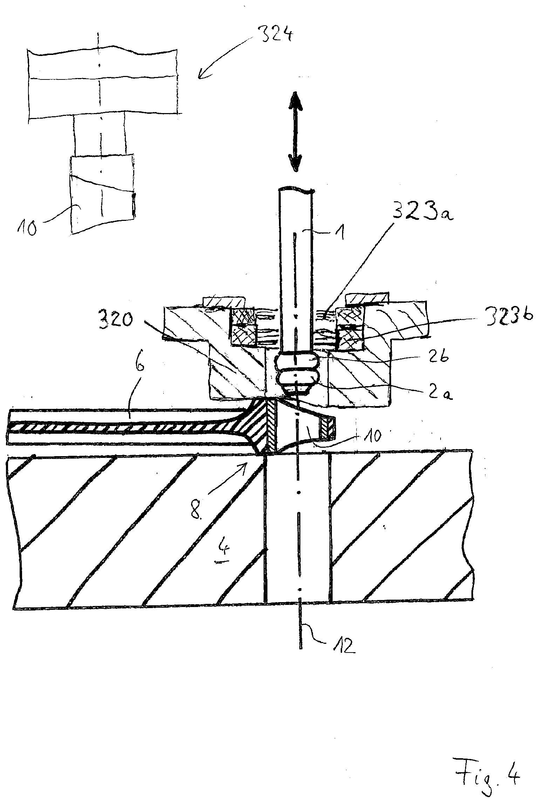

Figur 4 zeigt ein viertes Kalibrierwerkzeugs in einer seitlichen Ansicht. Es entspricht im Wesentlichen dem ersten Ausführungsbeispiel gemäß Figur 1, so dass im Folgenden nur die Unterschiede zum ersten Ausführungsbeispiel erläutert werden. Das Pleuelauge 8 wird über einen Niederhalter 320 des vierten Ausführungsbeispiels auf die Werkzeugaufnahme 4 gepresst, während die beiden Kugelabschnitte 2a, 2b die Buchse 10 kalibrieren und insbesondere während sie über die Stange 1 (in Figur 1) nach oben aus dem Pleuelauge 8 heraus gezogen werden.

Der Niederhalter 320 ist im Wesentlich rotationssymmetrisch um die Längsachse 12 des Werkzeugs ausgebildet, wobei in seinem Innern zwei rotationssymmetrische Reinigungsbürsten 323a, 323b aufgenommen sind. Deren Borsten weisen im Wesentlich radial nach innen zu der Längsachse 12 hin. Die beiden Reinigungsbürsten 323a, 323b dienen einerseits zum Abstreifen von Zinn-Partikeln, die aus einer Beschichtung der Buchse 10 heraus gelöst werden können, und die nach dem Kalibrieren an den Kugelabschnitten 2a, 2b haften. Weiterhin dienen die beiden Reinigungsbürsten 323a, 323b dazu, vor dem Kalibriervorgang geringe Mengen Schmierstoff an die beiden Kalibriersegmente 2a, 2b zu übertragen, um damit die Reibkraft, die von den Kugelabschnitten 2a, 2b an die Buchse 10 entlang der Längsachse 12 übertragen werden, zu verringern. Damit wird ein Herausschieben der Buchse 10 aus dem Pleuelauge 8 während des Kalibriervorgangs verhindert.

Weiterhin zeigt Figur 4 ein Einpresswerkzeug 324 für die Buchse 10. Dieses ist integral mit dem Kalibrierwerkzeug in einer Maschine zusammenfasst. Eine Einführrichtung des Einpresswerkzeugs 324 kann in der Einführrichtung des Kalibrierwerkzeugs oder dieser entgegen (in Figur 4 von unten) gerichtet sein.

Abweichend vom vierten Ausführungsbeispiel gemäß Figur 4 kann das Kalibrierwerkzeug mehr als vier, also n Kalibriersegmente aufweisen. Allgemein gilt für die Durchmesser D der n Kalibriersegmente, wenn diese in der Einführreihenfolge der Stange (in den Figuren von unten nach oben) durchnummeriert sind, folgende Durchmesser-Forderung:

$$D_1 \leq D_2 \ldots \leq D_{n-1}$$

Weiterhin gilt für das in Einführreihenfolge letzte Kalibriersegment n eine der folgenden Durchmesser-Forderungen:

$$D_{n-1} \leq D_n \text{ oder } D_{n-1} \geq D_n$$

Offenbart ist eine Kalibrierwerkzeug zum Kalibrieren einer Buchse. Es hat eine Stange bzw. einen Zapfen, die ein erstes verrundetes Kalibriersegment und zumindest ein weiteres verrundetes Kalibriersegment aufweist, die beide gegenüber der Stange radial erweitert sind. Zur genauen Formgebung einer zylindrischen Innenfläche der Buchse ist die Stange mit den Kalibriersegmenten durch die Buchse linear bewegbar. Dabei ist ein Abstand zwischen den beiden Kalibriersegmenten derart kurz bemessen, dass das erste Kalibriersegment mit einem entlang dem Umfang der Buchse geschlossenen Vollkreisbereich der Buchse in Anlage gebracht werden kann, während gleichzeitig das weitere Kalibriersegment mit einem entlang dem Umfang der Buchse teilweise offen Teilkreisbereich der Buchse in Anlage gebracht

werden kann.

Bezugzeichenliste

| 1; 101; 201 | Stange |
|---|---|
| 2a | erster Kugelabschnitt |
| 2b | zweiter Kugelabschnitt |
| 4 | Werkzeugaufnahme |
| 6 | Pleuel |
| 8 | Pleuelauge |
| 10 | Buchse |
| 12 | Längsachse |
| 13 | Vollkreisbereich |
| 14a | erster Teilkreisbereich |
| 14b | zweiter Teilkreisbereich |
| 18a, 18b | Linie |
| 101 | Stange |
| 102a | erster Kugelabschnitt |
| 102b | zweiter Kugelabschnitt |
| 102c | dritter Kugelabschnitt |
| 202d | vierter Kugelabschnitt |
| 222 | Einführteil |
| 320 | Niederhalter |
| 323 | Reinigungsbürste |
| 324 | Einpresswerkzeug |
| | |
| d1; D1, D2, D3 | Abstand |
| L10, L13 | Länge |

**Patentansprüche**

1. Verfahren zum Kalibrieren einer Buchse (10), die in ein Pleuelauge (8) eines Pleuels (6) mit einem Einpresswerkzeug (324) eingepresst ist, wobei die Buchse (10) einen mittleren Vollkreisbereich (13) und dazu axial benachbart einen ersten Teilkreisbereich (14a) und einen zweiten Teilkreisbereich (14b) hat, mit einem Kalibrierwerkzeug (101, 102a, 102b, 102c), das eine Stange (101) mit drei verrundeten Kalibriersegmenten (102a, 102b, 102c) hat, die gegenüber der Stange (101) radial erweitert sind, **gekennzeichnet durch** die Schritte:

    - Einfahren des dritten Kalibriersegments (102c) in den ersten Teilkreisbereich (14a);
    - Einfahren des dritten Kalibriersegments (102c) in den Vollkreisbereich (13);
    - Einfahren des ersten Kalibriersegments (102a) in den ersten Teilkreisbereich (14a) mit gleichzeitigem Abstützen der Stange (101) über das dritte Kalibriersegment (102c);
    - Einfahren des ersten Kalibriersegments (102a) in den Vollkreisbereich (13);
    - Einfahren des dritten Kalibriersegments (102c) in den zweiten Teilkreisbereich (14b) und Einfahren des zweiten Kalibriersegments (102b) in den ersten Teilkreisbereich (14a) bei gleichzeitigem Abstützen der Stange (101) über das erste Kalibriersegment (102a).

**Claims**

1. Method for calibrating a bushing (10) pressed into a connecting rod end (8) of a connecting rod (6) with a pressing-in tool (324), the bushing (10) having a central full circle region (13) and, axially adjacent thereto, a first partial circle region (14a) and a second partial circle region (14b), with a calibrating tool (101, 102a, 102b, 192c) having a rod (101) with three rounded calibrating segments (102a, 102b, 102c), which are radially widened relative to the rod (101), **characterised by** the steps of:

   - driving the third calibrating segment (102c) into the first full circle region (13);
   - driving the first calibrating segment (102a) into the first partial circle region (14a) while supporting the rod (101) via the third calibrating segment (102c);
   - driving the first calibrating segment (102a) into the full circle region (13);
   - driving the third calibrating segment (102c) into the second partial circle region (14b) and driving the second calibrating segment (102b) into the first partial circle region (14a) while supporting the rod (101) via the first calibrating segment (102a).

**Revendications**

1. Procédé pour calibrer un coussinet (10), qui est inséré à force dans une tête de bielle (8) d'une bielle (6) avec un outil d'insertion à force (324), dans lequel le coussinet (10) présente une zone entièrement circulaire (13) centrale et au voisinage axial de celle-ci une première zone semi-circulaire (14a) et une deuxième zone semi-circulaire (14b), avec un outil de calibrage (101, 102a, 102b, 102c), qui présente une tige (101) avec trois segments de calibrage (102a, 102b, 102c) arrondis, qui sont évasés radialement par rapport à la tige (101), **caractérisé par** les étapes :

   - d'introduction du troisième segment de calibrage (102c) dans la première zone semi-circulaire (14a) ;
   - d'introduction du troisième segment de calibrage (102c) dans la zone entièrement circulaire (13) ;
   - d'introduction du premier segment de calibrage (102a) dans la première zone semi-circulaire (14a) avec appui simultané de la tige (101) au-dessus du troisième segment de calibrage (102c) ;
   - d'introduction du premier segment de calibrage (102a) dans la zone entièrement circulaire (13) ;
   - d'introduction du troisième segment de calibrage (102c) dans la deuxième zone semi-circulaire (14b) et d'introduction du deuxième segment de calibrage (102b) dans la première zone semi-circulaire (14a) lors de l'appui simultané de la tige (101) au-dessus du premier segment de calibrage (102a).

FIG. 1

FiG. 2

FIG. 3

324

10

323a

320

6

1

323b

26

2a

10

8.

4

12

Fig. 4

**IN DER BESCHREIBUNG AUFGEFÜHRTE DOKUMENTE**

**In der Beschreibung aufgeführte Patentdokumente**

- AT 506831 A1
- US 3644005 A